# EUROPEAN PATENT APPLICATION

(11) **EP 2 824 008 A1**
(43) Date of publication of application: **14.01.2015**
(21) Application number: 12806323.7
(22) Date of filing: 27.02.2012
(51) Int. Cl.: B60W 10/10, B60K 6/445, B60K 6/48, B60K 6/54, B60W 20/00

(54) **HYBRID VEHICLE**

(71) Applicant: TOYOTA JIDOSHA KABUSHIKI KAISHA, Toyota-shi, Aichi-ken, 471-8571 (JP)
(72) Inventor: SATO, Keita, Toyota-shi, Aichi-ken, 471-8571 (JP)
(74) Representative: Intès, Didier Gérard André
(86) International application number: PCT/JP2012/054801
(87) International publication number: WO 2013/128552

(57) **Abstract**

In a hybrid vehicle provided with a transmission unit that allows manual gear shifting and is provided in a power transmission system that transmits power to driving wheels and an indication apparatus that is capable of providing a gear shift guide indication for prompting a manual gear shifting operation of the transmission unit, during engine start processing or during engine shutdown processing while the vehicle is traveling and/or before an engine start condition or an engine shutdown condition is established while the vehicle is traveling, the indication of the indication apparatus is provided in an indication form that is different from a gear shift guide indication for prompting a manual gear shifting operation and corresponds to the engine start processing or the engine shutdown processing. With such indication control, a situation can be eliminated in which, for example, the regular gear shift guide for prompting a manual gear shifting operation is indicated despite the fact that the effect of improving fuel consumption is unlikely to be obtained during the engine start processing, during the engine shutdown processing or the like. As a result, annoyance of the driver can be reduced.

## Description

### [Technical Field]

The present invention relates to a hybrid vehicle equipped with a transmission unit that allows manual gear shifting by the driver (operator), and more particularly to a hybrid vehicle provided with an indication apparatus that prompts the driver to perform a manual gear shifting operation of the transmission unit.

### [Background Art]

In recent years, from the viewpoint of environmental protection, there is demand for a reduction in the amount of exhaust gas emitted from engines (internal combustion engines) mounted in vehicles and improvement of fuel consumption rate (fuel consumption). As vehicles that satisfy the demand, hybrid vehicles have been developed and commercialized.

Hybrid vehicles are equipped with an engine and an electric motor (for example, a motor generator or a motor) that is driven by electric power generated by the output of the engine and electric power stored in a battery (electric power storage apparatus), and are capable of traveling by using either one or both of the engine and the electric motor as a driving power source(s). Such hybrid vehicles are also capable of motor-driven travel (hereinafter also referred to as "EV travel") in which the vehicles travel by using only the power of the electric motor, and thus intermittent operation (the operation in which engine shutdown and engine start are intermittently repeated) may sometimes be performed in which the operation of the engine is temporarily stopped even while the vehicle is traveling.

Among vehicles such as hybrid vehicles, there are vehicles that allow a manual gear shifting mode (sequential mode) to be selected. Such vehicles are equipped with a gear shift guide indication apparatus (generally called a "gear shift indicator (GSI)") that provides a gear shift guide (gear shift instruction) for prompting the driver to perform a gear shift operation (up-shift, down-shift) when a gear step that is different from the appropriate gear step (recommended gear step) in which the fuel consumption rate (fuel consumption) and the like can be improved is selected while the vehicle is traveling in the manual gear shifting mode (see, for example, Patent Literature 1).

Patent Literature 1 discloses a vehicle speed changing technique that provides an up-shift guide indication before and after completion of engine warm-up.

### [Citation List]

### [Patent Literature]

[PTL 1] WO 2006-068301
[PTL 2] JP 2001-027321A

### [Disclosure of Invention]

### [Technical Problems]

With hybrid vehicles, engine shutdown processing for shutting down the engine while the vehicle is traveling and engine start processing for starting the engine may sometimes be performed, but no consideration has been previously given to indications of the gear shift guide indication apparatus at the time of the engine start processing or the engine shutdown processing.

The present invention has been made under the above-described circumstances, and it is an object of the present invention to provide a hybrid vehicle provided with an indication apparatus that is capable of indicating a gear shift guide for prompting the driver to perform a manual gear shifting operation, wherein an indication suitable for engine start processing or engine shutdown processing can be provided while the vehicle is traveling.

### [Means for Solving the Problems]

The present invention is premised on a hybrid vehicle including an engine that is capable of outputting power for travel, an electric motor that is capable of outputting power for travel, a transmission unit that allows manual gear shifting and is provided in a power transmission system that transmits power to driving wheels and an indication apparatus that is capable of providing a gear shift guide indication for prompting a manual gear shifting operation of the transmission unit, the hybrid vehicle being capable of motor-driven travel that enables traveling by using only power of the electric motor. This hybrid vehicle has a technical feature in which during engine start processing or during engine shutdown processing while the vehicle is traveling and/or before an engine start condition or an engine shutdown condition is established when it is predicted that the engine start condition (automatic engine start condition) or the engine shutdown condition (automatic engine shutdown condition) will be established while the vehicle is traveling, an indication of the indication apparatus is provided in an indication form that is different from the gear shift guide indication for prompting manual gear shifting and corresponds to the engine start processing or the engine shutdown processing.

In the present invention, the prediction of establishment of the engine start condition or the engine shutdown condition is performed, for example, based on at least one of the remaining capacity (SOC of a battery) in an electric power storage apparatus mounted in the hybrid vehicle and a driving force request made by the driver.

According to the present invention, during the engine start processing or during the engine shutdown processing while the vehicle is traveling and/or before an engine start condition or an engine shutdown condition is established while the vehicle is traveling, the indication of the indication apparatus is provided in an indication form that is different from the gear shift guide indication for prompting the driver to perform a manual gear shifting operation and corresponds to the engine start processing or the engine shutdown processing, and therefore an indication suitable for the engine start processing or the engine shutdown processing can be provided. It is thereby possible to eliminate a situation in which, for example, the regular gear shift guide for prompting the driver to perform a manual gear shifting operation is indicated despite the fact that the effect of improving fuel consumption is unlikely to be obtained during the engine start processing or during the engine shutdown processing, as a result of which annoyance of the driver can be reduced. Furthermore, an indication form corresponding to the engine start/shutdown processing can be provided during the engine start processing or during the engine shutdown processing, as a result of which it is possible to inform the driver that the engine start processing or the engine shutdown processing is being executed.

In the present invention, a configuration is possible in which when it is predicted that an engine start condition or an engine shutdown condition will be established, only before the engine start condition or the engine shutdown condition is established (before the engine start processing or the engine shutdown processing), the indication of the indication apparatus is provided in an indication form corresponding to the engine start/shutdown processing. In this case, for example, the indication of the indication apparatus may be provided in the indication form corresponding to the engine start/shutdown processing for a predetermined period of time (given time) from the time when it was predicted that the engine start/shutdown condition will be established.

In the present invention, the indication form corresponding to the engine start/shutdown processing can be an indication form in which both an up-shift indication unit (up-shift lamp) and a down-shift indication unit (down-shift lamp) of the indication apparatus are illuminated or an indication form in which the indication units (lamps) of the indication apparatus are blinked.

Another example of the indication form can be an indication form in which an individual indication unit (dedicated indication unit) corresponding to the engine start/shutdown processing is provided and the dedicated indication unit (lamp) is illuminated. Still another example of the indication form can be an indication form in which no gear shift guide is provided (no gear shift guide indication is provided (the indication units are extinguished)) during the engine start processing or during the engine shutdown processing. The indication form is not limited to those described above, and any other indication form can be used as long as it is different from the gear shift guide indication for prompting manual gear shifting.

In the present invention, a specific configuration of a power transmission system that allows gear shifting in a manual gear shifting mode can be a configuration that is provided with a continuously variable transmission mechanism that allows a transmission ratio to be steplessly switched, and in the manual gear shifting mode in which the transmission unit is manually shifted, the transmission ratio set in the continuously variable transmission mechanism is switched to a plurality of steps.

A specific configuration of a hybrid vehicle to which the present invention is applied can be a configuration that is provided with a power dividing mechanism constituted by a planetary gear mechanism including a planetary carrier to which an output shaft of the engine is coupled, a sun gear to which a first electric motor (first motor generator MG1) is coupled and a ring gear to which a second electric motor (second motor generator MG2) is coupled, and in which the transmission ratio in the power transmission system can be changed by controlling the rotation speed of the first electric motor to change the rotation speed of the engine.

Another specific configuration of a hybrid vehicle to which the present invention is applied can be a configuration that is provided with an engine and an electric motor, and in which a stepped transmission that allows a gear step to be manually selected is provided in a power transmission path between the electric motor and the driving wheels.

### [Effects of the Invention]

According to the present invention, with a hybrid vehicle provided with an indication apparatus that can indicate a gear shift guide for prompting the driver to perform a manual gear shifting operation, an indication suitable for engine start processing or engine shutdown processing can be provided while the vehicle is traveling.

### [Brief Description of Drawings]

[FIG. 1]

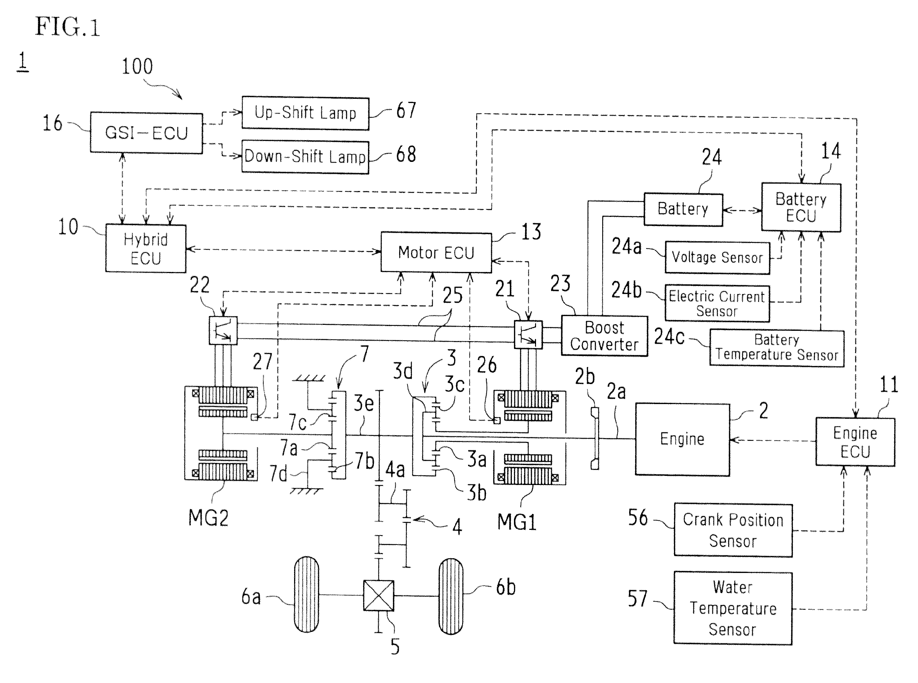

   FIG. 1 is a schematic configuration diagram showing an example of a hybrid vehicle to which the present invention is applied.
[FIG. 2]

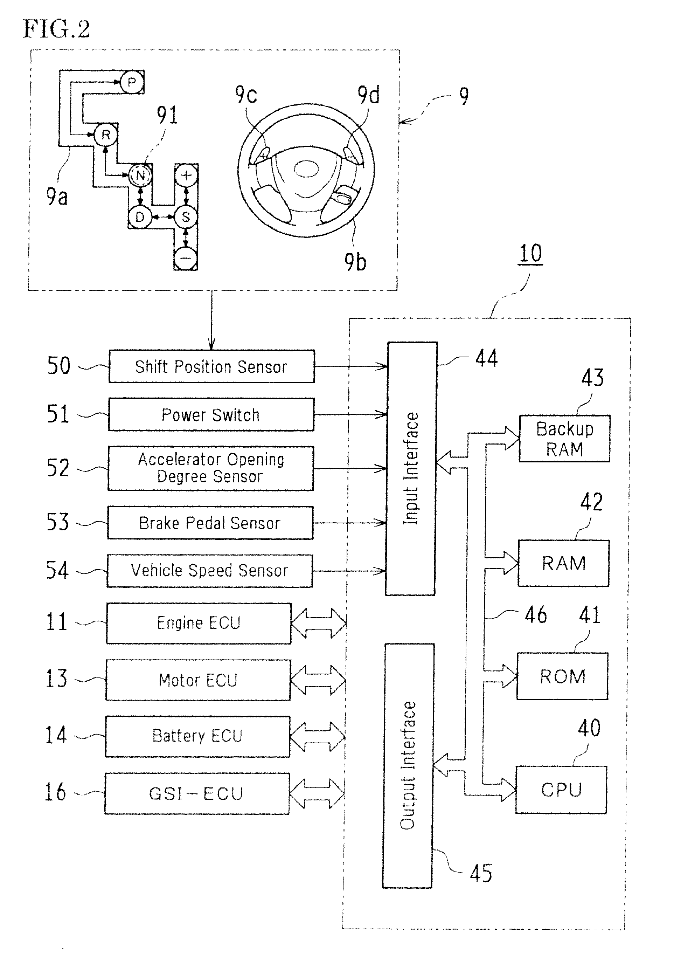

   FIG. 2 is a block diagram showing a schematic configuration of a control system of the hybrid vehicle shown in FIG. 1.
[FIG. 3]

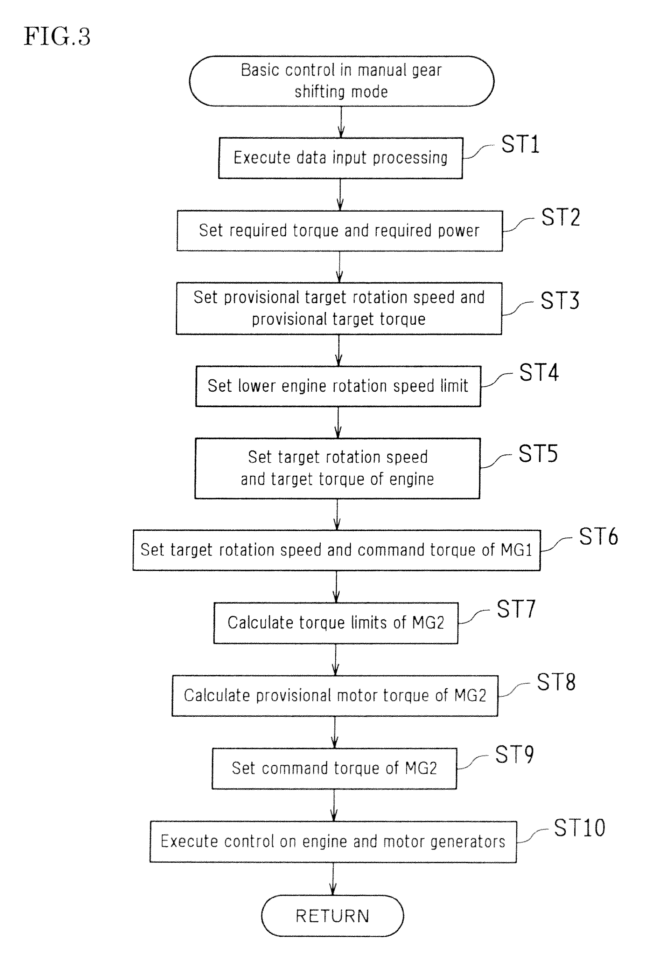

   FIG. 3 is a diagram showing a flowchart illustrating the procedure of basic control in a manual gear shifting mode.
[FIG. 4]

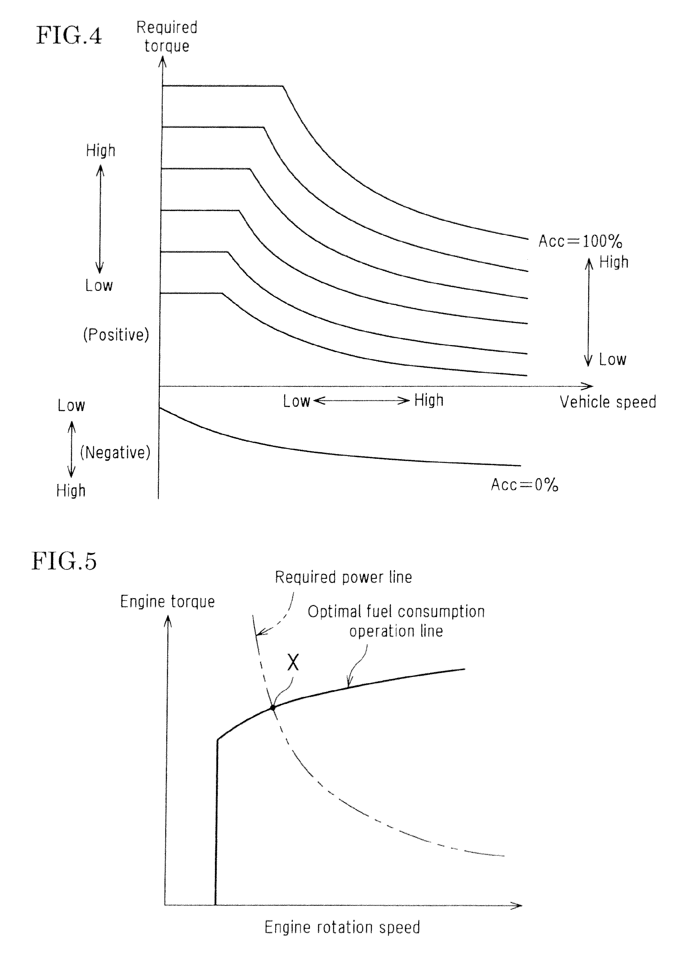

   FIG. 4 is a diagram showing a required torque setting map.
[FIG. 5]
   FIG. 5 is a diagram showing an example of an optimal fuel consumption operation line of an engine and a required power line.
[FIG. 6]

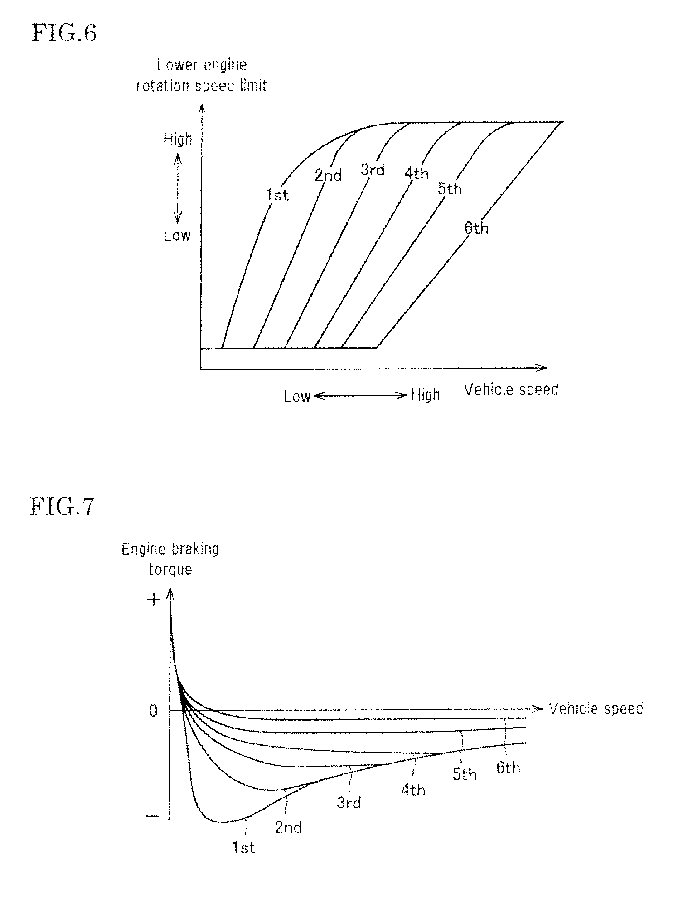

   FIG. 6 is a diagram showing a lower engine rotation speed limit setting map.
[FIG. 7]
   FIG. 7 is a diagram showing engine brake characteristics obtained according to the vehicle speed and the gear step.
[FIG. 8]

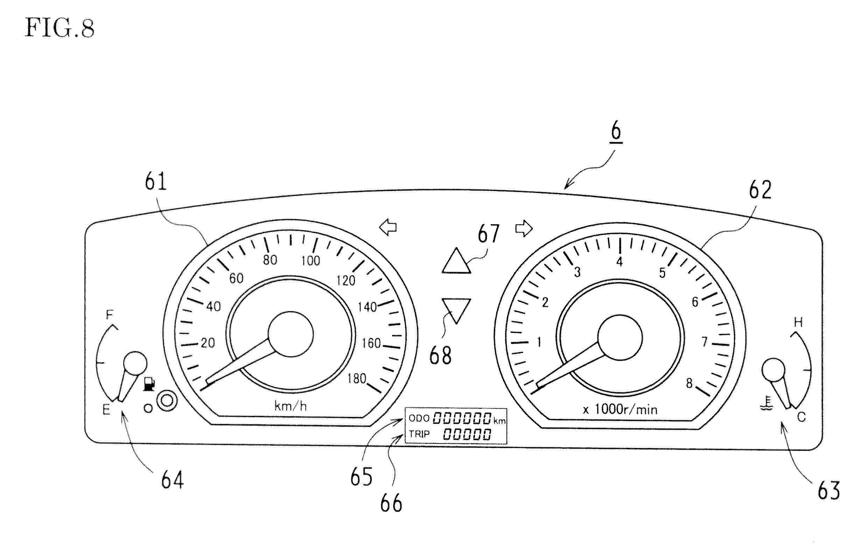

   FIG. 8 is a diagram showing a combination meter mounted in a hybrid vehicle.
[FIG. 9]

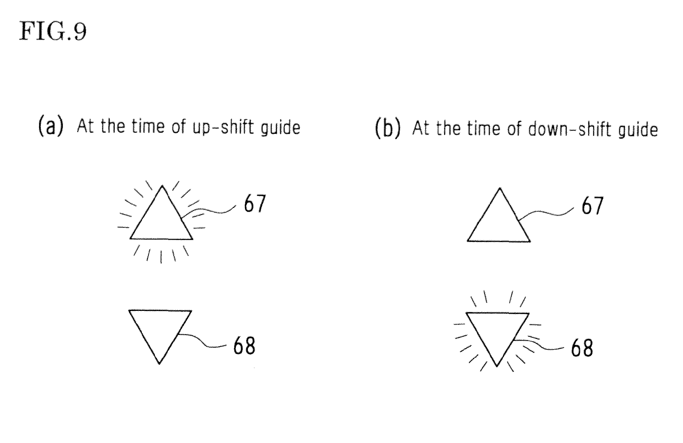

   FIG. 9 shows diagrams showing an up-shift lamp and a down-shift lamp in an illuminated state, with FIG. 9(a) showing an up-shift guide indication and FIG. 9(b) showing a down-shift guide indication.
[FIG. 10]

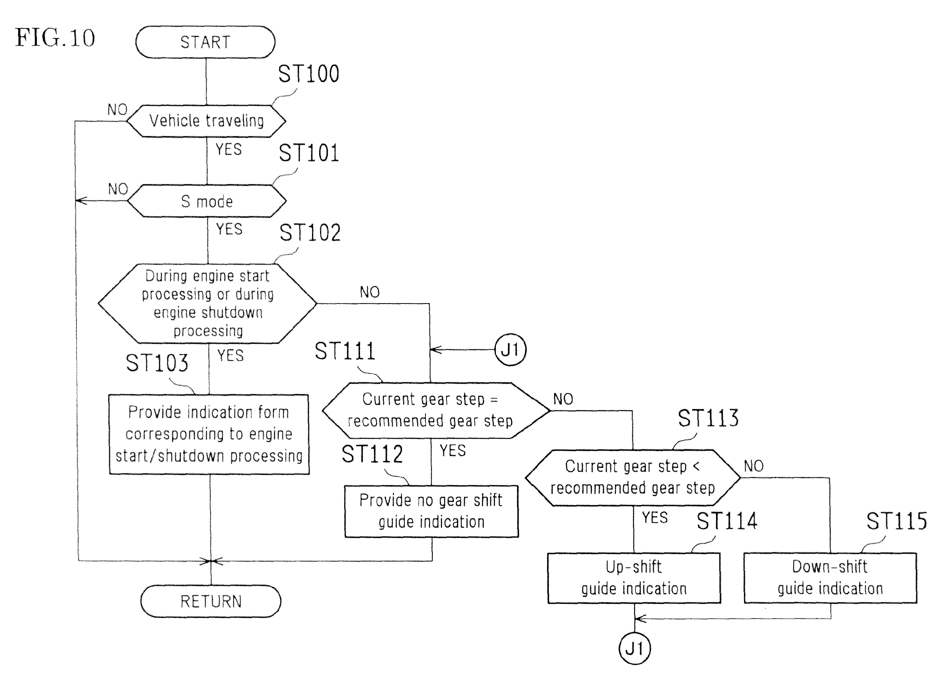

   FIG. 10 is a flowchart illustrating an example of gear shift guide indication control.
[FIG. 11]

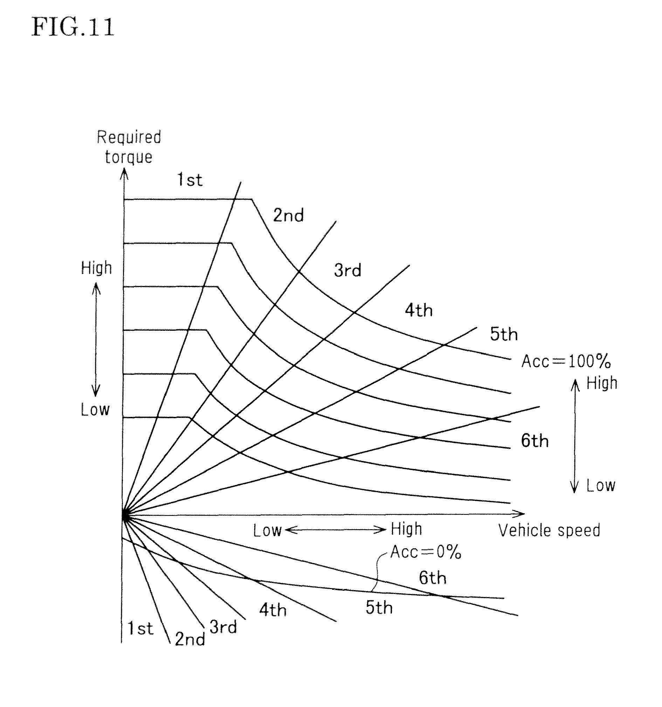

   FIG. 11 is a diagram showing an example of a shift line map.
[FIG. 12]

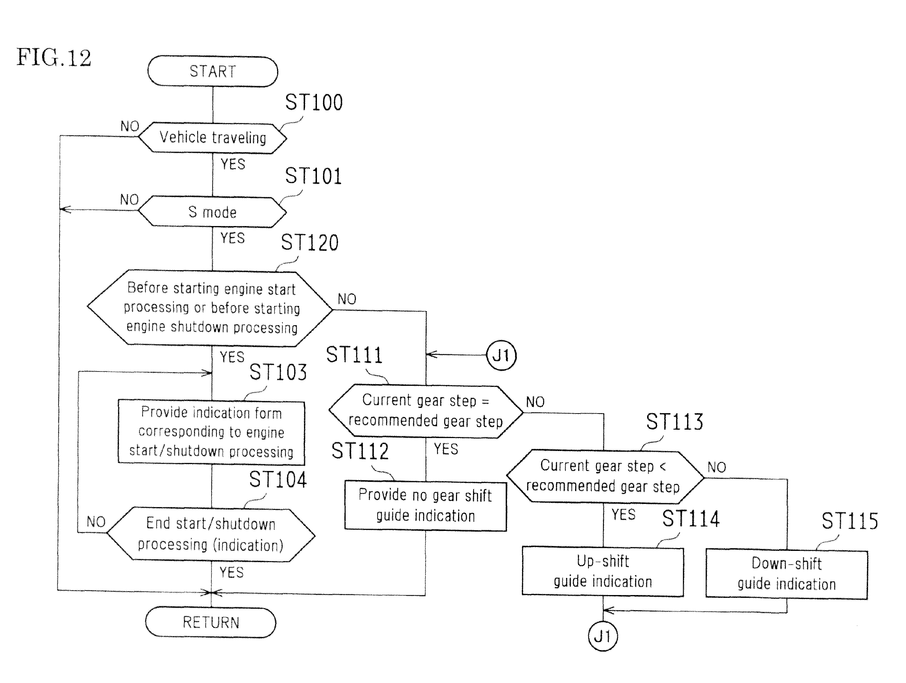

   FIG. 12 is a flowchart illustrating another example of gear shift guide indication control.
[FIG. 13]

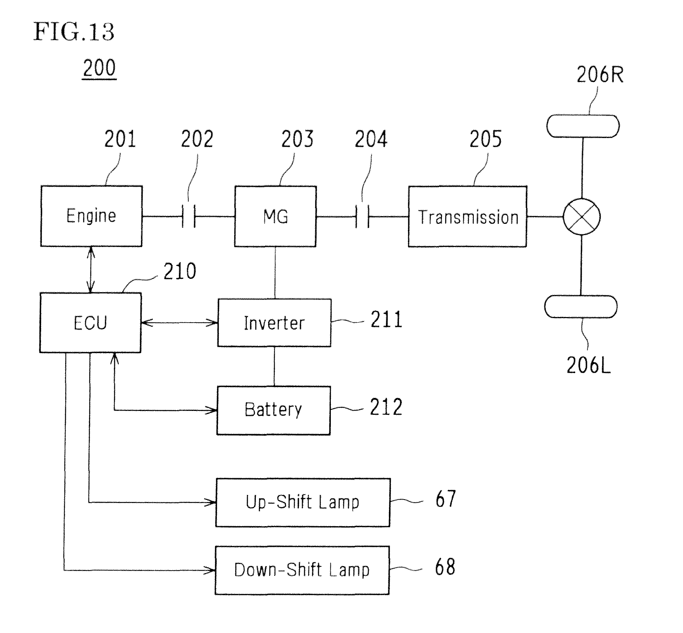

   FIG. 13 is a schematic configuration diagram showing another example of a hybrid vehicle to which the present invention is applied.

### [Mode for Carrying Out the Invention]

Hereinafter, embodiments of the present invention will be described with reference to the drawings.

### Embodiment 1

FIG. 1 is a schematic configuration diagram showing an example of a hybrid vehicle to which the present invention is applied.

A hybrid vehicle 1 shown in FIG. 1 is an FF (front engine front drive) hybrid vehicle 1 that includes, as a driving system for providing a driving force to driving wheels (front wheels) 6a and 6b, an engine 2, a tri-axial power dividing mechanism 3 that is connected to a crankshaft 2a serving as an output shaft of the engine 2 via a damper 2b, a first motor generator MG1 that is capable of electric power generation and is connected to the power dividing mechanism 3, and a second motor generator MG2 that is connected to a ring gear shaft 3e serving as a driving shaft connected to the power dividing mechanism 3 via a reduction mechanism 7. The crankshaft 2a, the power dividing mechanism 3, the first motor generator MG1, the second motor generator MG2, the reduction mechanism 7 and the ring gear shaft 3e together constitute the power transmission system as used in the present invention.

The ring gear shaft 3e is connected to the driving wheels 6a and 6b via a gear mechanism 4 and a differential gear 5 for the front wheels.

The hybrid vehicle 1 also includes a hybrid electronic control unit (hereinafter referred to as the "hybrid ECU (Electronic Control Unit)") 10 that performs overall control of the driving system of the vehicle.

### - Engine and Engine ECU-

The engine 2 is an internal combustion engine that outputs power by using hydrocarbon fuel such as gasoline or light oil, and in which operational control such as fuel injection control, ignition control, and intake air amount adjustment control is performed by an engine electronic control unit (hereinafter referred to as the "engine ECU") 11 that receives input of signals from various sensors that detect the operating state of the engine 2.

The engine ECU 11, which communicates with the hybrid ECU 10, performs operational control on the engine 2 based on a control signal from the hybrid ECU 10 and outputs data regarding the operating state of the engine 2 to the hybrid ECU 10 where necessary. A crank position sensor 56, a water temperature sensor 57 and the like are connected to the engine ECU 11. The crank position sensor 56 outputs a detection signal (pulse) each time the crankshaft 2a rotates a predetermined angle. The engine ECU 11 calculates an engine rotation speed Ne based on an output signal from the crank position sensor 56. The water temperature sensor 57 outputs a detection signal according to the coolant temperature of the engine 2.

### - Power Dividing Mechanism -

As shown in FIG. 1, the power dividing mechanism 3 is configured as a planetary gear mechanism that includes an externally toothed sun gear 3a, an internally toothed ring gear 3b that is disposed concentrically with the sun gear 3a, a plurality of pinion gears 3c that are engaged with the sun gear 3a and also engaged with the ring gear 3b, and a planetary carrier 3d that holds the pinion gears 3c so as to be capable of rotation and revolution, the planetary gear mechanism producing a differential action by using the sun gear 3a, the ring gear 3b and the planetary carrier 3d as a rotation elements. In the power dividing mechanism 3, the crankshaft 2a of the engine 2 is coupled to the planetary carrier 3d. Also, a rotor (rotating element) of the first motor generator MG1 is coupled to the sun gear 3a, and the reduction mechanism 7 is coupled to the ring gear 3b via the ring gear shaft 3e.

In the power dividing mechanism 3 configured as described above, when a counter torque against an output torque of the engine 2 input into the planetary carrier 3d is produced by the first motor generator MG1, and that counter torque is input into the sun gear 3a, a torque that is larger than the torque input from the engine 2 appears in the ring gear 3b serving as an output element. In this cause, the first motor generator MG1 functions as an electric power generator. When the first motor generator MG1 functions as an electric power generator, the driving force of the engine 2 input from the planetary carrier 3d is distributed between the sun gear 3a and the ring gear 3b according to the gear ratio.

On the other hand, when there is a request to start the engine 2, the first motor generator MG1 functions as an electric motor (starter motor), and the driving force of the first motor generator MG1 is provided to the crankshaft 2a via the sun gear 3a and the planetary carrier 3d, and the engine 2 is thereby cranked.

In the power dividing mechanism 3, when the rotation speed (output shaft rotation speed) of the ring gear 3b is constant, the rotation speed of the engine 2 can be changed continuously (steplessly) by changing the rotation speed of the first motor generator MG1 up or down.

### - Reduction Mechanism -

As shown in FIG. 1, the reduction mechanism 7 includes an externally toothed sun gear 7a, an internally toothed ring gear 7b that is disposed concentrically with the sun gear 7a, a plurality of pinion gears 7c that are engaged with the sun gear 7a and also engaged with the ring gear 7b, and a planetary carrier 7d that holds the pinion gears 7c so as to be capable of rotation. In the reduction mechanism 7, the planetary carrier 7d is fixed to a transmission case, the sun gear 7a is coupled to a rotor (rotating element) of the second motor generator MG2, and the ring gear 7b is coupled to the ring gear shaft 3e.

### - Power Switch -

The hybrid vehicle 1 is provided with a power switch 51 (see FIG. 2) for switching between startup and shutdown of a hybrid system. The power switch 51 is, for example, a spring-back type push switch that is configured to be alternately turned on and off each time the push switch is pressed/operated. As used herein, the term "hybrid system" refers to a system that controls travel of the hybrid vehicle 1 by executing various control operations including operational control of the engine 2. driving control of the motor generators MG1 and MG2, and cooperative control of the engine 2 and the motor generators MG1 and MG2, by using the engine 2 and the motor generators MG1 and MG2 as travel power sources.

The power switch 51, when operated by a passenger such as the driver, outputs a signal corresponding to the operation (an IG-On command signal or an IG-Off command signal) to the hybrid ECU 10. The hybrid ECU 10 starts or shuts down the hybrid system based on a signal or the like output from the power switch 51.

Specifically, if the power switch 51 is operated while the hybrid vehicle 1 is stopped, the hybrid ECU 10 starts the hybrid system while the transmission is in the P position, which brings the vehicle into a travel ready state. At the time of starting of the hybrid system while the vehicle is stopped, the hybrid system is started while the transmission is in the P position, and thus no driving force is output even if an acceleration operation is performed. The term "travel ready state" refers to a state (Ready-On state) in which vehicle travel can be controlled by the command signals from the hybrid ECU 10 and the hybrid vehicle 1 can take off/travel if the driver performs an acceleration operation. The Ready-On state encompasses a state (EV travel ready state) in which the hybrid vehicle 1 can take off/travel by the second motor generator MG2 while the engine 2 is in a shutdown state.

Also, if, for example, the power switch 51 is operated (for example, briefly pushed) when the hybrid system has been started and the transmission is in the P position while the vehicle is stopped, the hybrid ECU 10 shuts down the hybrid system.

### - Shift Operation Apparatus and Shifting Mode -

The hybrid vehicle 1 of the present embodiment is provided with a shift operation apparatus 9 as shown in FIG. 2. The shift operation apparatus 9 is disposed in the vicinity of the driver's seat and is provided with a shift lever 91 that can be operated and moved. Also, a shift gate 9a, which has a parking position (P position), a reverse position (R position), a neutral position (N position), a drive position (D position), and a sequential position (S position), is formed in the shift operation apparatus 9 so that the driver can move the shift lever 91 to any desired position. All these positions, namely, the P position, the R position, the N position, the D position, and the S position (including the following "+" position and "-" position), are detected by a shift position sensor 50.

If the shift lever 91 is operated to the "D position", the hybrid system is brought into an "automatic shifting mode" and electric continuously variable transmission control is performed in which the transmission ratio is controlled such that the operation points of the engine 2 are marked on an optimal fuel consumption operation line, which will be described later.

If, on the other hand, the shift lever 91 is operated to the "S position", the hybrid system is brought into a "manual gear shifting mode (sequential shift mode (S modes "+" position and a "-" position are provided in the front and back of the S position. The "+" position is a position into which the shift lever 91 is operated when a manual up-shift is performed, and the "-" position is a position into which the shift lever 91 is operated when a manual down-shift is performed. If the shift lever 91 in the S position is operated to the "+" position or the "-" position (manual gear shifting operation), with the S position being located therebetween, a pseudo gear step (for example, a gear step established by adjusting the engine rotation speed under control of the first motor generator MG1) established by the hybrid system is moved up or down. Specifically, the gear step is moved up by one step (for example, 1st → 2nd → 3rd → 4th → 5th → 6th) each time the shift lever 91 is operated to the "+" position, and is moved down by one step (for example, 6th → 5th → 4th → 3rd → 2nd → 1st) each time the shift lever 91 is operated to the "-" position. The number of steps that can be selected in the manual gear shifting mode is not limited to six and may be any other number (for example, four or eight).

The concept of the manual gear shifting mode in the present invention is not limited to a situation in which the shift lever 91 is in the sequential position (S position) as above described, and encompasses situations in which "2 (2nd)", "3 (3rd)" and so on are provided as range positions and the shift lever is operated to the range positions "2 (2nd)" and "3 (3rd)". For example, if the shift lever is operated from the drive position to the range position "3 (3rd)", the mode is changed from the automatic shifting mode to the manual gear shifting mode.

Also, a steering wheel 9b (see FIG. 2) disposed in front of the driver's seat is provided with paddle switches 9c and 9d. The paddle switches 9c and 9d are configured as levers and include an up-shift paddle switch 9c for outputting a command signal that requests an up-shift in the manual gear shifting mode and a down-shift paddle switch 9d for outputting a command signal that requests a down-shift. The up-shift paddle switch 9c is given the "+" sign, and the down-shift paddle switch 9d is given the "-" sign. When the mode is in the "manual gear shifting mode" as a result of the shift lever 91 being operated to the "S position", if the up-shift paddle switch 9c is operated (pulled forward), the gear step is moved up by one step each time the operation is performed. If, on the other hand, the down-shift paddle switch 9d is operated (pulled forward), the gear step is moved down by one step each time the operation is performed.

As described above, with the hybrid system of the present embodiment, when the shift lever 91 is operated to the "D position" to bring the mode into the "automatic shifting mode", driving control is performed such that the engine 2 is efficiently operated. Specifically, the hybrid system is controlled such that the driving operation points of the engine 2 are marked on the optimal fuel consumption line. When, on the other hand, the shift lever 91 is operated to the "S position" to bring the mode into the "manual gear shifting mode (S mode)", the transmission ratio, which is the ratio of the rotation speed of the engine 2 to the rotation speed of the ring gear shaft 3e, can be changed to any one of six steps (1st to 6th) according to the gear shift operation by the driver. Note that the first gear step (1st) is the gear step having the largest transmission ratio, and the sixth gear step (6th) is the gear step having the smallest transmission ratio.

### - Motor Generator and Motor ECU -

The motor generators MG1 and MG2 are each configured with a known synchronous generator-motor that can be driven as an electric power generator as well as an electric motor, and exchange electric power with a battery (electric power storage apparatus) 24 via inverters 21 and 22 and a boost converter 23. Electric power lines 25 that connect the inverters 21 and 22, the boost converter 23 and the battery 24 are respectively configured as a positive electrode bus line and a negative electrode bus line that are shared by the inverters 21 and 22, and configured such that electric power generated by either of the motor generators MG1 and MG2 can be consumed by the other motor. Accordingly, the battery 24 is charged by the electric power generated by either of the motor generators MG1 and MG2 or discharged when the electric power is insufficient. The battery 24 is not charged or discharged when the electric power is balanced by the motor generators MG1 and MG2.

The motor generators MG2 and MG2 are both driven and controlled by a motor electronic control unit (hereinafter referred to as the "motor ECU") 13. Signals required to drive and control the motor generators MG1 and MG2, such as signals from an MG1 rotation speed sensor (resolver) 26 and an MG2 rotation speed sensor 27, which detect the rotational positions of the rotors (rotary shafts) of the motor generators MG1, MG2, and a phase current applied to the motor generators MG1 and MG2, which is detected by an electric current sensor, are input into the motor ECU 13. The motor ECU 13 outputs switching control signals to the inverters 21 and 22. For example, either of the motor generators MG1 and MG2 is driven and controlled as an electric power generator (for example, the second motor generator MG2 is subjected to regenerative control) or as an electric motor (for example, the second motor generator MG2 is subjected to power running control). Also, the motor ECU 13 communicates with the hybrid ECU 10, and thus drives and controls the motor generators MG1 and MG2 in the manner described above according to the control signals from the hybrid ECU 10 and also outputs data regarding the operating state of the motor generators MG1 and MG2 to the hybrid ECU 10 where necessary.

### - Battery and Battery ECU -

The battery 24 is managed by a battery electronic control unit (hereinafter referred to as the "battery ECU") 14. Signals required to manage the battery 24, such as an inter-terminal voltage from a voltage sensor 24a installed between the terminals of the battery 24, a charge/discharge current from an electric current sensor 24b attached to the electric power lines 25 connected to the output terminal of the battery 24, and a battery temperature Tb from a battery temperature sensor 24c attached to the battery 24, are input into the battery ECU 14. The battery ECU 14 outputs data regarding the state of the battery 24 to the hybrid ECU 10 through communication where necessary.

In order to manage the battery 24, the battery ECU 14 computes a remaining capacity SOC (the state of charge) based on an integrated value of the charge/discharge current detected by the electric current sensor 24b and also computes an input limit Win and an output limit Wout, which are the maximum permissible electric power in charging and discharging of the battery 24, based on the computed remaining capacity SOC and the battery temperature Tb detected by the battery temperature sensor 24c. The input limit Win and the output limit Wout of the battery 24 can be set by setting basic values of the input limit Win and the output limit Wout based on the battery temperature Tb, setting an input limit correction coefficient and an output limit correction coefficient based on the remaining capacity SOC of the battery 24, and multiplying the set basic values of the input limit Win and the output limit Wout by the correction coefficients.

### - Hybrid ECU and Control System -

As shown in FIG. 2, the hybrid ECU 10 includes a CPU (Central Processing Unit) 40, a ROM (Read Only Memory) 41, a RAM (Random Access Memory) 42, a backup RAM 43. and so on. The ROM 41 stores various control programs, maps that are referred to when the control programs are executed, and the like. The CPU 40 executes various types of computation processing based on the control programs and maps stored in the ROM 41. The RAM 42 is a memory that temporarily stores results of computation performed by the CPU 40, data input from each sensor, and the like. The backup RAM 43 is a nonvolatile memory that stores data and the like that need to be saved during IG-Off, for example.

The CPU 40, the ROM 41, the RAM 42 and the backup RAM 43 are connected to each other via a bus 46, and are also connected to an input interface 44 and an output interface 45.

The shift position sensor 50, the power switch 51, an accelerator opening degree sensor 52 that outputs a signal corresponding to the amount of depression of the accelerator pedal, a brake pedal sensor 53 that outputs a signal corresponding to the amount of depression of the brake pedal, a vehicle speed sensor 54 that outputs a signal corresponding to the speed of the vehicle body and the like are connected to the input interface 44.

With this configuration, a shift position signal from the shift position sensor 50, an IG-On signal and an IG-Off signal from the power switch 51, an accelerator opening degree signal from the accelerator opening degree sensor 52, a brake pedal position signal from the brake pedal sensor 53, and a vehicle speed signal from the vehicle speed sensor 54 and the like are input into the hybrid ECU 10.

The engine ECU 11, the motor ECU 13, the battery ECU 14, and a GSI (Gear Shift Indicator)-ECU 16, which will be described later, are connected to the input interface 44 and the output interface 45, and the hybrid ECU 10 transmits and receives various control signals and data to and from the engine ECU 11, the motor ECU 13, the battery ECU 14, and the GSI-ECU 16.

### - Flow of Driving Force in Hybrid System -

The hybrid vehicle 1 configured as described above calculates a torque (required torque) that needs to be output to the driving wheels 6a and 6b based on an accelerator opening degree Acc that corresponds to the amount of depression of the accelerator pedal by the driver and a vehicle speed V. and the engine 2 and the motor generators MG1 and MG2 are operated and controlled such that the hybrid vehicle 1 travels with the required driving force corresponding to the calculated required torque. Specifically, in order to reduce the amount of fuel consumption, in an operating range in which the required driving force is relatively low, control is performed such that the required driving force is obtained by using the second motor generator MG2. On the other hand, in an operating range in which the required driving force is relatively high, control is performed such that the second motor generator MG2 is used and the engine 2 is driven, and the required driving force is obtained by the driving force from these driving sources (traveling power sources).

More specifically, when the operational efficiency of the engine 2 is low such as when the vehicle takes off or travels at a low speed, the vehicle travels by using only the second motor generator MG2 (hereinafter also referred to as "EV travel"). EV travel is also performed when the driver has selected an EV travel mode by using a travel mode selecting switch disposed in the vehicle cabin.

On the other hand, during regular travel (hereinafter also referred to as "HV travel"), for example, the driving force of the engine 2 is split into two paths (torque split) by the power dividing mechanism 3, with one of the driving forces used to directly drive the driving wheels 6a and 6b (direct torque driving) and the other driving force used to generate electric power by driving the first motor generator MG1. At this time, the second motor generator MG2 is driven by using the electric power generated by driving the first motor generator MG1 so as to assist driving of the driving wheels 6a and 6b (electric path driving).

As described above, the power dividing mechanism 3, which functions as a differential mechanism, mechanically transmits most of the power from the engine 2 to the driving wheels 6a and 6b by using its differential action and electrically transmits the remaining part of the power from the engine 2 via an electric path from the first motor generator MG1 to the second motor generator MG2, whereby the function as an electric continuously variable transmission in which the transmission ratio is electrically changed is exhibited. This enables the engine rotation speed and the engine torque to be freely manipulated without depending on the rotation speed and torque of the driving wheels 6a and 6b (the ring gear shaft 3e), and the operating state of the engine 2 in which the fuel consumption rate is optimized can be obtained while the driving force required by the driving wheels 6a and 6b is obtained.

Also, when the vehicle travels at a high speed, the electric power from the battery 24 is further supplied to the second motor generator MG2 so as to increase the output of the second motor generator MG2, whereby an additional driving force is supplied to the driving wheels 6a and 6b (driving force assistance; power running).

Furthermore, when the vehicle decelerates, the second motor generator MG2, which functions as an electric power generator, performs regenerative electric power generation and stores the recovered electric power in the battery 24. In the case where the amount of charge in the battery 24 is low and the battery 24 particularly needs to be charged, the amount of charge in the battery 24 is increased by increasing the output of the engine 2 to increase the amount of electric power generation by the first motor generator MG1. Even when the vehicle travels at a low speed, control may be performed so as to increase the driving amount of the engine 2 where necessary. Examples of such situations include a situation in which the battery 24 needs to be charged as described above, a situation in which an accessory machine such as an air conditioner is driven, and a situation in which the temperature of the coolant of the engine 2 is raised to a predetermined temperature.

In the hybrid vehicle 1 of the present embodiment, the engine 2 is shut down to improve the fuel consumption depending on the operating state of the vehicle and the state of the battery 24. And after that, the engine 2 is restarted by detecting the operating state of the hybrid vehicle 1 and the state of the battery 24. In this manner, in the hybrid vehicle 1, even when the power switch 51 is the ON position, the engine 2 undergoes intermittent operation (the operation in which engine shutdown and engine start are intermittently repeated). The intermittent operation of the engine 2 will be described in further detail.

First, the hybrid ECU 10 executes processing to shut down the engine 2 when an automatic engine shutdown condition has been established. Specifically, when an automatic engine shutdown condition has been established, the engine 2 is shut down (engine rotation speed = 0) by performing fuel injection shutdown (fuel cut-off (there are cases where ignition cut-off is also executed)) and at the same time reducing the engine rotation speed by the first motor generator MG1. The expression "during engine shutdown processing" used in the present invention refers to the period between the time when an automatic engine shutdown condition is established and the time when the engine 2 is shut down by the engine shutdown processing described above.

If an automatic engine start condition is established when the engine 2 has been shut down by the engine shutdown processing, automatic engine start processing is executed. Specifically, upon establishment of an automatic engine start condition, the engine 2 is motored (cranked) by the first motor generator MG1 and at the same time fuel injection is started. Furthermore, the engine 2 is started by performing control so as to suppress the torque (reaction force) transmitted to the driving wheels 6a and 6b as a result of motoring by the first motor generator MG1 by using the output torque of the second motor generator MG2. The expression "during engine start processing" used in the present invention refers to the period between the time when an automatic engine start condition is established and the time when the engine 2 enters a complete combustion station (a state in which self-sustaining operation is possible) by the engine start processing described above.

The "automatic engine shutdown condition" and "automatic engine start condition" described above are generally known conditions in hybrid vehicles. For example, "an automatic engine shutdown condition is established" when there is no engine operation request such as a battery request. an air conditioner request or a driving force request, and "an automatic engine operation condition is established" when there is such an engine operation request.

The hybrid ECU 10 predicts whether or not an automatic engine start condition described above will be established or predicts whether or not an automatic engine shutdown condition described above will be established based on information such as the battery state (the remaining capacity SOC in the battery 24, the output limit Wout, the input limit Win and the like) and the driving force request made by the driver.

### - Basic Control in Manual Gear Shifting Mode -

Next, basic control in the hybrid system in the "manual gear shifting mode" mentioned above will be described.

FIG. 3 is a flowchart illustrating the procedure of basic control in the manual gear shifting mode executed by the hybrid ECU 10 when the driver operates the shift lever 91 to the S position and performs an acceleration operation. This flowchart is repeatedly executed at a predetermined time interval (for example, every several milliseconds).

First, in step ST1, processing is executed to input data required for control such as a gear step recognized based on the output signal from the shift position sensor 50 (gear step selected in the manual gear shifting mode; hereinafter also referred to as the "shift position SP"), the accelerator opening degree Acc determined based on the output signal from the accelerator opening degree sensor 52, the vehicle speed V determined based on the output signal from the vehicle speed sensor 54, rotation speeds Nm1 and Nm2 of the motor generators MG1 and MG2 determined based on the output signals from the MG1 rotation speed sensor 26 and the MG2 rotation speed sensor 27, a charge/discharge required power Pb, and the input limit Win and the output limit Wout, which are the permissible electric power in charging and discharging of the battery 24.

Information regarding the rotation speeds Nm1 and Nm2 of the motor generators MG1 and MG2 is input from the motor ECU 13 into the hybrid ECU 10. The charge/discharge required power Pb is the electric power used to charge/discharge the battery, which is set by the battery ECU 14 based on the remaining capacity SOC of the battery 24 and the like, and is input from the battery ECU 14 into the hybrid ECU 10. Furthermore, the input limit Win as the charge permissible electric power, which is the electric power permitted in charging of the battery 24. and the output limit Wout as the discharge permissible electric power, which is the electric power permitted in discharging of the battery 24, are set based on the battery temperature Tb detected by the battery temperature sensor 24c and the remaining capacity (SOC) in the battery 24, and are input from the battery ECU 14 into the hybrid ECU 10.

After the data input processing in step ST1, the procedure advances to step ST2, where a required torque Tr that needs to be output to the ring gear shaft 3e is set based on the shift position SP, the accelerator opening degree Acc and the vehicle speed V that have been input, and a required power Pe required from the engine 2 is set.

In the present embodiment, the ROM 41 stores a required torque setting map in which the relationship between the shift position SP, the accelerator opening degree Acc, the vehicle speed V and the required torque Tr is preset, and the required torque Tr corresponding to the shift position SP, the accelerator opening degree Acc and the vehicle speed V is extracted by referencing the required torque setting map.

FIG. 4 shows an example of a required torque setting map. The required torque setting map shown in FIG. 4 is a map that is used to determine the torque requested by the driver by using the vehicle speed V and the accelerator opening degree Acc as parameters and in which a plurality of characteristic lines are shown so as to correspond to different accelerator opening degrees Acc. Among the characteristic lines, the topmost characteristic line corresponds to the fully open accelerator opening degree (Acc = 100%). The characteristic line corresponding to the fully closed accelerator opening degree Acc is indicated by "Acc = 0%". These characteristic lines have the property in which the torque requested by the driver for generating braking force relatively increases as the vehicle speed V becomes higher.

The required power Pe is calculated as a sum of a product (Tr × Nr) obtained by multiplying the required torque Tr determined from the required torque setting map of FIG. 4 by the rotation speed Nr of the ring gear shaft 3e, the charge/discharge required power Pb (whose required discharge side is positive), and a loss Loss.

Next, the procedure advances to step ST3, where a provisional target rotation speed Netmp and a provisional target torque Tetmp, which constitute provisional target driving operation points (operation points) of the engine 2, are set based on the required power Pe set in step ST2. In the present embodiment, it is assumed that the provisional target rotation speed Netmp and the provisional target torque Tetmp of the engine 2 are set based on an operation line used to efficiently operate the engine 2 that is preset as a restriction for setting driving operation points used for regular travel (HV travel) (hereinafter also referred to as an "optimal fuel consumption operation line") and the required power Pe.

FIG. 5 shows an example of an optimal fuel consumption operation line of the engine 2 and a correlation curve (required power line) between rotation speed Ne and torque Te. As shown in FIG. 5, the provisional target rotation speed Netmp and the provisional target torque Tetmp can be determined as the intersection (point X in the diagram) of the optimal fuel consumption operation line and the correlation curve (required power line) indicating that the required power Pe (Ne x Te) becomes constant.

After the provisional target rotation speed Netmp and the provisional target torque Tetmp of the engine 2 have been set in the manner as described above, the procedure advances to step ST4, where a lower engine rotation speed limit Nemin that is the lower limit value of the rotation speed Ne of the engine 2 is set based on the shift position SP and the vehicle speed V that have been input.

In the hybrid vehicle 1 of the present embodiment, when the sequential position is selected as the shift position SP, the lower engine rotation speed limit Nemin is preset according to the vehicle speed V and the shift position SP (1st to 6th).

FIG. 6 is a lower engine rotation speed limit setting map in which the relationship between the shift position SP, the vehicle speed V (or the rotation speed of the ring gear shaft 3e) and the lower engine rotation speed limit Nemin is preset. The lower engine rotation speed limit setting map is stored in the ROM 41 of the hybrid ECU 10, and a value corresponding to a given vehicle speed V and shift position SP is extracted from the map and set as the lower engine rotation speed limit Nemin.

That is, different operation point setting restrictions (target rotation speed setting restrictions) of the engine 2 are associated with the shift positions 1st to 6th. Specifically, the lower engine rotation speed limit Nemin is set to be a value that becomes smaller as the shift position SP increases (from the 1st toward the 6th) with respect to the same vehicle speed V. This is done to, in the case where the friction of the engine 2 is used to cause the resistance to function as an engine brake (braking force applied to the driving wheels 6a and 6b) such as when the accelerator opening degree Acc is small or when an acceleration operation is not performed, simulate an engine brake similar to that of a vehicle provided with a manual gear shifting machine (manual transmission) by limiting the reduction of the engine rotation speed as the gear step becomes lower (the transmission ratio becomes higher) so as to generate a sufficient braking force. By the lower engine rotation speed limit Nemin being set, the magnitude of the engine-braking torque (torque acting on the driving wheels 6a and 6b as a braking force) varies depending on the gear step and the vehicle speed as shown in FIG. 7, and even at the same vehicle speed (the same vehicle speed that is equal to or higher than a predetermined vehicle speed), the lower the gear step (the higher the transmission ratio), the larger the resulting engine braking torque.

After the lower engine rotation speed limit Nemin has been set in the manner as described above, the procedure advances to step ST5. where the higher of the provisional target rotation speed Netmp and the lower engine rotation speed limit Nemin is set as target rotation speed Ne of the engine 2, and the target torque Te of the engine 2 is set by dividing the required power Pe set in step ST2 by the target rotation speed Ne.

After that, the procedure advances to step ST6, where the target rotation speed Nm1 of the first motor generator MG1 is calculated by using the target rotation speed Ne set above, the rotation speed Nr of the ring gear shaft 3e and a gear ratio p of the power dividing mechanism 3 (the number of teeth of the sun gear 3a / the number of teeth of the ring gear 3b), and a command torque Tm1 of the first motor generator MG1 is set based on the calculated target rotation speed Nm1 and the current rotation speed Nm1.

After the command torque Tm1 of the first motor generator MG1 has been set in the manner as described above, the procedure advances to step ST7, where torque limits Tmin and Tmax as the upper and lower limits of the torque that may be output from the second motor generator MG2 are calculated by dividing the difference between the input and output limits Win and Wout of the battery 24 and the power consumption (electric power generation) of the first motor generator MG1, which is obtained as a product of the command torque Tm1 and the current rotation speed Nm1 of the first motor generator MG1, by the rotation speed Nm2 of the second motor generator MG2.

Next, in step ST8, the provisional motor torque Tm2tmp as the torque that needs to be output from the second motor generator MG2 is calculated based on the required torque Tr, the command torque Tm1, the gear ratio p of the power dividing mechanism 3 and a gear ratio Gr of the reduction mechanism 7. Then, in step ST9, the command torque Tm2 of the second motor generator MG2 is set as a value obtained by limiting the provisional motor torque Tm2tmp with the torque limits Tmin and Tmax calculated in step ST7 above. By setting the command torque Tm2 of the second motor generator MG2 in this manner, the torque output to the ring gear shaft 3e can be set as a torque limited within the range between the input limit Win and the output limit Wout of the battery 24.

After the target rotation speed Ne and the target torque Te of the engine 2 and the command torques Tm1 and Tm2 of the motor generators MG1 and MG2 have been set in the manner as described above, the procedure advances to step ST10, where control is executed on the engine 2 and the motor generators MG1 and MG2 by transmitting the target rotation speed Ne and the target torque Te of the engine 2 to the engine ECU 11 and the command torques Tm1 and Tm2 of the motor generators MG1 and MG2 to the motor ECU 13. Specifically, the engine ECU 11 that has received the target rotation speed Ne and the target torque Te executes engine control (fuel injection control, ignition control, intake air amount adjustment control and the like) for obtaining the target rotation speed Ne and the target torque Te. Also, the motor ECU 13 that has received the command torques Tm1 and Tm2 performs switching control on the switching elements of the inverters 21 and 22 such that the first motor generator MG1 is driven by using the command torque Tm1 and the second motor generator MG2 is driven by using the command torque Tm2.

By repeating the above operation, in the hybrid vehicle 1, when the S position has been selected as the shift position SP (when the manual gear shifting mode has been selected), the required torque Tr and the target driving operation points (the target rotation speed Ne and the target torque Te) of the engine 2 are set based on the shift position SP (1st to 6th), and the engine 2 and the motor generators MG1 and MG2 are controlled such that the torque based on the required torque Tr is output to the ring gear shaft 3e, as a result of which it is possible to respond to the driver's acceleration and deceleration requests with good responsivity.

### - Gear Shift Guide Indication Apparatus -

The hybrid vehicle 1 of the present embodiment is equipped with a gear shift guide indication apparatus (indication apparatus) 100 that indicates a gear shift guide for prompting the driver to perform a manual gear shifting operation when in the manual gear shifting mode (S mode). Hereinafter, the gear shift guide indication apparatus 100 will be described.

As shown in FIG. 8, in a combination meter 6 disposed in front of the driver's seat in the vehicle cabin, a speedometer 61, a tachometer 62, a water temperature gauge 63, a fuel gauge 64, an odometer 65, a trip meter 66, various warning indicator lamps and the like are disposed.

The combination meter 6 is provided with the gear shift guide indication apparatus 100 that instructs a selection of a gear step (gear position) suitable for improving fuel consumption and the like according to the traveling state of the hybrid vehicle 1. The gear shift guide indication apparatus 100 will be described below.

In the combination meter 6, as indication units for indicating a gear shift guide, an up-shift lamp 67 that is illuminated to indicate (guide) up-shifting of the gear step and a down-shift lamp 68 that is illuminated to indicate (guide) down-shifting of the gear step are disposed. The up-shift lamp 67 and the down-shift lamp 68 are, for example, LEDs or the like, and illumination (or blinking) and extinguishment of these lamps are controlled by the GSI-ECU 16 (see FIG. 1). The up-shift lamp 67, the down-shift lamp 68 and the GSI-ECU 16 together constitute the gear shift guide indication apparatus 100. It may also be possible to use a configuration in which the engine ECU 11 or a power management ECU (not shown) controls illumination and extinguishment of the up-shift lamp 67 and the down-shift lamp 68, without providing the GSI-ECU 16.

### - Gear Shift Guide Indication Control -

First, in the hybrid vehicle 1 of this example, as described above, engine shutdown processing for shutting down the engine 2 and engine start processing for restarting the shutdown engine 2 may be performed while the vehicle is traveling in the S mode, but no consideration has been previously given to gear shift guide indications (gear shift guide indications by the gear shift guide indication apparatus 100) during the engine start processing and the engine shutdown processing. Accordingly, a situation may occur in which a regular gear shift guide indication (for example, a fuel consumption-emphasized gear shift guide indication) is performed despite the fact that the effect of improving fuel consumption is unlikely to be obtained during the shutdown processing or start processing of the engine 2. In this case, the driver may feel annoyed.

In view of the above, in the present embodiment, a configuration is used in which when the engine start processing or the engine shutdown processing is carried out while the vehicle is traveling in the S mode, the indication of the gear shift guide indication apparatus 100 is provided in an indication form that is different from the gear shift guide indication for prompting the driver to perform manual gear shifting and corresponds to the engine start processing or the engine shutdown processing, whereby annoyance of the driver can be reduced. An example of specific control (gear shift guide indication control) for implementing this will be described with reference to the flowchart shown in FIG. 10.

The control routine shown in FIG. 10 is repeatedly executed by the hybrid ECU 10.

A shift line map used in gear shift guide indication control will be described with reference to FIG. 11 before the gear shift guide indication control of FIG. 10 is described.

The shift line map shown in FIG. 11 is a map that uses required torque, vehicle speed V and accelerator opening degree Acc as parameters and in which a plurality of regions (regions partitioned by shift switch lines from the first gear step (1st) to the sixth gear step (6th)) for determining an appropriate gear step (recommended gear step at which optimal fuel consumption is obtained) according to the required torque, the vehicle speed V and the accelerator opening degree Acc are set, and the shift line map is stored in the ROM 41 of the hybrid ECU 10.

Gear shift guide indication control shown in FIG. 10 will be described next.

When the control routine shown in FIG. 10 starts, first, in step ST100, it is determined whether or not the hybrid vehicle 1 is traveling based on the output signal of the vehicle speed sensor 54. If, as a result, a negative determination (NO) is made, the procedure returns because it is unnecessary to perform gear shift guide indication control (no gear shift guide indication is provided). If the result of determination made in step ST100 is affirmative (YES), the procedure advances to step ST101.

In step ST101, it is determined whether or not the S mode (manual gear shifting mode) has been selected based on the output signal of the shift position sensor 50. If, as a result, a negative determination (NO) is made, the procedure returns because it is unnecessary to perform gear shift guide indication control (no gear shift guide indication is provided). If the result of determination made in step ST101 is affirmative (YES), the procedure advances to step ST102.

In step ST102, it is determined whether or not either one of the conditions "during engine start processing" and "during engine shutdown processing" has been established while the vehicle is traveling. If, as a result, an affirmative determination (YES) is made, or in other words, the condition is either during engine start processing or during engine shutdown processing, the procedure advances to step ST103. If, on the other hand, the result of determination made in step ST102 is negative (NO), or in other words, the condition is neither during engine start processing nor during engine shutdown processing, the procedure advances to step ST111.

In step ST111, the current vehicle speed V is determined from the output signal of the vehicle speed sensor 54, and the current accelerator opening degree Acc is determined from the output signal of the accelerator opening degree sensor 52. Then, the required torque Tr is determined by using the vehicle speed V and the accelerator opening degree Acc and referencing the required torque setting map shown in FIG. 4. Based on the required torque Tr and the vehicle speed V or the accelerator opening degree Acc, the recommended gear step (target gear step) is then determined by referencing the shift line map shown in FIG. 11. Then, the recommended gear step and the current gear step are compared, and it is determined whether or not the recommended gear step and the current gear step match. If, as a result, an affirmative determination (YES) is made (if [current gear step = recommended gear step] is satisfied), no gear shift guide indication by the gear shift guide indication apparatus 100 is provided (step ST112).

The current gear step can be obtained from, for example, a transmission ratio obtained by calculating the ratio (transmission ratio) between the rotation speed (engine rotation speed) of the input shaft (the planetary carrier 3d) and the rotation speed of the ring gear shaft 3e (obtained from the vehicle speed sensor 54 or an output signal indicating the output shaft rotation speed) in the power dividing mechanism 3. The current gear step can also be obtained from the gear step set when the shift lever 91 is operated to the S position, the number of operations to the "+" position or the "-" position at the S position and the like based on the output signal of the shift position sensor 50.

If the result of determination made in step ST111 is negative (NO) (if the recommended gear step and the current gear step do not match), the procedure advances to step ST113. In step ST113, it is determined whether or not the current gear step is lower than the recommended gear step (current gear step < recommended gear step). If, as a result, an affirmative determination (YES) is made, the procedure advances to step ST114.

In step ST114, the up-shift lamp 67 is illuminated (see FIG. 9(a)) by transmitting a control signal for carrying out an up-shift command from the hybrid ECU 10 to the GSI-ECU 16. The up-shift lamp 67 is kept illuminated (the up-shift guide indication is maintained) until the result of determination made in step ST111 becomes affirmative (YES). If, in response to the up-shift guide indication by the up-shift lamp 67 being illuminated, the driver operates the shift lever 91 to the "+" position or operates the up-shift paddle switch 9c, an up-shift operation is performed in the hybrid system. When the current gear step and the recommended gear step match through the up-shift operation (when the result of determination made in step ST111 becomes affirmative (YES)), the up-shift lamp 67 is extinguished, and the gear shift guide indication by the gear shift guide indication apparatus 100 is stopped (step ST112).

If both the results of determination made in steps ST111 and ST113 are negative (NO), or in other words, the current gear step is higher than the recommended gear step (current gear step > recommended gear step), the procedure advances to step ST115.

In step ST115, the down-shift lamp 68 is illuminated (see FIG. 9(b)) by transmitting a control signal for carrying out a down-shift command from the hybrid ECU 10 to the GSI-ECU 16. The down-shift lamp 68 is kept illuminated (the down-shift guide indication is maintained) until the result of determination made in step ST111 becomes affirmative (YES). If, in response to the down-shift guide indication by the down-shift lamp 68 being illuminated, the driver operates the shift lever 91 to the "-" position or operates the down-shift paddle switch 9d, a down-shift operation is performed in the hybrid system. When the current gear step and the recommended gear step match through the down-shift operation (when the result of determination made in step ST111 becomes affirmative (YES)), the down-shift lamp 68 is extinguished, and the gear shift guide indication by the gear shift guide indication apparatus 100 is stopped (step ST112).

The gear shift guide indication control in steps ST111 to ST115 is also executed during EV travel in which the driving wheels 6a and 6b are driven by using only the second motor generator MG2.

If, on the other hand, the result of determination made in step ST102 is affirmative (YES), or in other words, the condition is either during engine start processing or during engine shutdown processing, the processing of step ST103 is executed. Specifically, a control signal for carrying out indication in an indication form corresponding to engine shutdown/start processing is transmitted from the hybrid ECU 10 to the GSI-ECU 16, and the indication of the gear shift guide indication apparatus 100 is provided in an indication form corresponding to the engine shutdown processing or the engine start processing. Examples of the indication form include an indication form in which both the up-shift lamp 67 and the down-shift lamp 68 shown in FIGS. 1 and 9 are illuminated and an indication form in which both the up-shift lamp 67 and the down-shift lamp 68 are blinked.

The processing of step ST103 (processing for providing an indication in an indication form corresponding to the engine start/shutdown processing) continues if the result of determination made in step ST102 is affirmative (YES) and ends when the result of determination made in step ST102 becomes negative (NO), or in other words, when the engine start processing or the engine shutdown processing ends. If the vehicle stops (step ST100: NO) or the S mode ends (step ST101: NO) during execution of the indication processing in an indication form corresponding to the engine start/shutdown processing, the indication processing in an indication form corresponding to the engine start/shutdown processing ends immediately.

As another example of the indication form in step ST103. it is possible to use an indication form in which an individual indication unit (dedicated indication unit (indication lamp)) corresponding to the engine start/shutdown processing is provided and the dedicated indication unit is illuminated or blinked.

As still another example of the indication form in step ST103, it is possible to use an indication form in which no gear shift guide is provided during the engine start processing or during the engine shutdown processing (an indication form in which both the up-shift lamp 67 and the down-shift lamp 68 shown in FIGS. 1 and 9 are extinguished).

Furthermore, the indication provided during the engine start processing or during the engine shutdown processing is not limited to the indication forms described above, and any other indication form may be used as long as it is different from the gear shift guide indication for prompting the driver to perform manual gear shifting.

### <Effects>

As described above, according to the present embodiment, when engine start processing or engine shutdown processing is carried out while the vehicle is traveling, the indication of the gear shift guide indication apparatus 100 is provided in an indication form that is different from the gear shift guide indication for prompting the driver to perform a manual gear shifting operation and corresponds to the engine start processing or the engine shutdown processing (for example, an indication form in which both the up-shift lamp 67 and the down-shift lamp 68 are illuminated). Accordingly, a situation can be eliminated in which the regular gear shift guide for prompting the driver to perform a manual gear shifting operation is indicated despite the fact that the effect of improving fuel consumption is unlikely to be obtained during the engine start processing or during the engine shutdown processing. As a result, annoyance of the driver can be reduced. Furthermore, the indication is provided in an indication form corresponding to the engine start/shutdown processing during the engine start processing or during the engine shutdown processing, as a result of which it is possible to inform the driver that the engine start processing or the engine shutdown processing is being executed.

### (Variation 1)

Another example of gear shift guide indication control will be described with reference to FIG. 12. The control routine shown in FIG. 12 can also be executed by the hybrid ECU 10.

When the control routine shown in FIG. 12 starts, first, in step ST100, it is determined whether or not the hybrid vehicle 1 is traveling based on the output signal of the vehicle speed sensor 54. If, as a result, a negative determination (NO) is made, the procedure returns because it is unnecessary to perform gear shift guide indication control (no gear shift guide indication is provided). If the result of determination made in step ST100 is affirmative (YES), the procedure advances to step ST101.

In step ST101, it is determined whether or not the S mode (manual gear shifting mode) has been selected based on the output signal of the shift position sensor 50. If, as a result, a negative determination (NO) is made, the procedure returns because it is unnecessary to perform gear shift guide indication control (no gear shift guide indication is provided). If the result of determination made in step ST101 is affirmative (YES), the procedure advances to step ST120.

In step ST120, it is determined whether or not either one of the conditions "before starting engine start processing" or "before starting engine shutdown processing" has been established while the vehicle is traveling.

As used herein, "before starting engine start processing" refers to the timing at which, for example, it is predicted that an automatic engine start condition will be established based on information such as the battery state (the remaining capacity SOC in the battery 24, the output limit Wout, the input limit Win and the like) and the driving force request (the timing before establishment of an automatic engine start condition). Similarly, "before starting engine shutdown processing" refers to the timing at which, for example, it is predicted that an automatic engine shutdown condition will be established based on information such as the battery state and the driving force request (the timing before establishment of an automatic engine shutdown condition).

If the result of determination made in step ST120 is affirmative (YES), or in other words, if the condition is either before starting engine start processing or before starting engine shutdown processing (corresponding to "before an engine start condition or an engine shutdown condition is established when it is predicted that the engine start condition or the engine shutdown condition will be established while the vehicle is traveling" recited in the appended claims), the procedure advances to step ST103. If, on the other hand, the result of determination made in step ST120 is negative (NO), or in other words, the condition is neither before starting engine start processing nor before starting engine shutdown processing, the procedure advances to step ST111. Each process in steps ST111 to ST115 is the same as each process in steps ST111 to ST115 shown in FIG. 10, and thus a detailed description thereof is not given here.

If the result of determination made in step ST120 is affirmative (YES), the processing of step ST103 is executed. Specifically, a control signal for carrying out indication in an indication form corresponding to the engine shutdown/start processing is transmitted from the hybrid ECU 10 to the GSI-ECU 16, and the indication of the gear shift guide indication apparatus 100 is provided in an indication form corresponding to the engine shutdown processing or the engine start processing. The indication in an indication form corresponding to the engine start/shutdown processing is continuously carried out during start processing after the engine start processing has been started or during shutdown processing after the engine shutdown processing has been started. In this example as well, examples of the indication form corresponding to the engine start/shutdown processing are the same as those described in Embodiment 1 above, and thus a specific description thereof is not given here.

Next, in step ST104. it is determined whether or not the engine start processing or the engine shutdown processing has ended (the engine start/shutdown processing has ended). If, as a result, a negative determination (NO) is made (if the engine start/shutdown processing is still being carried out), the processing of step ST103, or in other words, the indication in an indication form corresponding to the engine start/shutdown processing is maintained. If the result of determination made in step ST104 is affirmative (YES) (if the engine start/shutdown processing has ended), the indication in an indication form corresponding to the engine start/shutdown processing ends, and the procedure returns.

### <Effects>

As described above, according to this example, before starting engine start processing or before starting engine shutdown processing while the vehicle is traveling (before an engine start condition or an engine shutdown condition is established), the indication of the gear shift guide indication apparatus 100 is provided in an indication form corresponding to the engine start/shutdown processing (for example, an indication form in which both the up-shift lamp 67 and the down-shift lamp 68 are illuminated), and also, during the engine start processing or during the engine shutdown processing, the indication of the gear shift guide indication apparatus 100 is provided in the indication form corresponding to the engine start/shutdown processing. Accordingly, for example, a situation can be eliminated in which the regular gear shift guide for prompting the driver to perform a manual gear shifting operation is indicated despite the fact that the effect of improving fuel consumption is unlikely to be obtained during the engine start processing, during the engine shutdown processing or the like. As a result, annoyance of the driver can be reduced. Furthermore, the indication in an indication form corresponding to the engine start/shutdown processing is provided during the engine start processing or during the engine shutdown processing, as a result of which it is possible to inform the driver that the engine start processing or the engine shutdown processing is being executed.

In this variation, in the case where it is predicted that an automatic engine start condition or an automatic engine shutdown condition will be established, the indication of the gear shift guide indication apparatus 100 may be provided in an indication form corresponding to the engine start/shutdown processing only before the automatic engine start condition or the automatic engine shutdown condition is established (only before engine start processing or engine shutdown processing). In this case, for example, the indication of the gear shift guide indication apparatus 100 may be provided in the indication form corresponding to the engine start/shutdown processing for a predetermined period of time (given time) from the time when it was predicted that the automatic engine start / automatic shutdown condition will be established.

### Embodiment 2

In Embodiment 1 described above, an example was described in which the present invention is applied to a hybrid vehicle HV equipped with two motor generators MG1 and MG2, but the present invention is not limited thereto and is applicable to a hybrid vehicle equipped with a single motor generator and a single multi-step transmission. An example thereof will be described with reference to FIG. 13.

The hybrid vehicle in this example is an FR (front engine rear drive) hybrid vehicle 200 that includes an engine 201, a motor generator (MG2) 203, a transmission 205, an inverter 211 that drives the motor generator 203, a battery 212 that supplies electric power for driving the motor generator 203 and stores electric power generated by the motor generator 203, an ECU 210, and so on. The engine 201 and the motor generator 203 are coupled via a first clutch 202. The motor generator 203 and the transmission 205 are coupled via a second clutch 204. The crankshaft of the engine 201, the first clutch 202, the motor generator 203, the second clutch 204. the transmission 205 and the like together constitute a power transmission system as used in the present invention.

The engine 201 is a known power apparatus (internal combustion engine) that burns fuel and outputs power such as a gasoline engine or a diesel engine and is configured so as to be capable of controlling the operating state such as the throttle opening degree (intake air amount) of a throttle valve provided in an intake path, fuel injection amount and ignition timing. Exhaust gas produced after combustion passes through an exhaust path (not shown), undergoes purification by an oxidization catalyst, and thereafter is released into the atmosphere.

The transmission 205 is a stepped (planetary gear) automatic transmission that sets a gear step (six forward travel gear steps and one reverse travel gear step) by using, for example, frictionally engaging elements, such as a clutch and a brake, and a planetary gear mechanism.

The hybrid vehicle 200 of this embodiment is capable of EV travel that drives driving wheels (rear wheels) 206L and 206R by using only the motor generator 203 by cutting off (releasing) the first clutch 202 and connecting (engaging) the second clutch 204. Also, by connecting (engaging) both the first clutch 202 and the second clutch 204, the hybrid vehicle 200 is also capable of travel that drives the driving wheels 206L and 206R by using the driving force of the engine 201, as well as capable of performing charging or generating assist torque by the motor generator 203.

The hybrid vehicle 200 of this embodiment is also provided with a shift operation apparatus 9, paddle switches 9c and 9d and the like such as those shown in FIG. 2, and is configured such that when the shift lever 91 of the shift operation apparatus 9 is switched from the D position to the S position (S mode), an S mode signal is output from a shift position sensor (not shown) to the ECU 210, and the mode is changed to the S mode in which a range switching operation with sequential shiftmatic is possible.

Furthermore, the hybrid vehicle 200 of this embodiment is also equipped with a functional unit that constitutes a gear shift guide indication apparatus such as a combination meter 6 (see FIG. 8) in which, as gear shift guide indication units, an up-shift lamp 67 that is illuminated to provide an up-shift guide and a down-shift lamp 68 that is illuminated to provide a down-shift guide are disposed. Illumination of the up-shift lamp 67 and the down-shift lamp 68 is controlled by the ECU 210.

In the hybrid vehicle 200 of this embodiment as well, it is possible to use a configuration in which by execution of control similar to the gear shift guide indication control (the control routine shown in FIG. 10) described in Embodiment 1 above, during engine start processing or during engine shutdown processing while the vehicle is traveling, the indication of the gear shift guide indication apparatus is provided in an indication form that is different from the gear shift guide indication for prompting the driver to perform a manual gear shifting operation and corresponds to the engine start processing or the engine shutdown processing (for example, in an indication form in which both the up-shift lamp 67 and the down-shift lamp 68 are illuminated).

It is also possible to use a configuration in which by execution of control similar to the gear shift guide indication control (the control routine shown in FIG. 12) described in Variation 1 of Embodiment 1 above, before starting engine start processing or engine shutdown processing (before an automatic engine start condition or an automatic engine shutdown condition is established when it is predicted that the engine start condition or the engine shutdown condition will be established while the vehicle is travelling), the indication of the gear shift guide indication apparatus is provided in an indication form corresponding to the engine start/shutdown processing, and during the engine start processing or during engine shutdown processing, and the indication of the gear shift guide indication apparatus is provided in the indication form corresponding to the engine start/shutdown processing.

Furthermore, in this embodiment as well, when it is predicted that an automatic engine start condition or an automatic engine shutdown condition will be established, the indication of the gear shift guide indication apparatus 100 may be provided in an indication form that corresponds to the engine start/shutdown processing only before the automatic engine start condition or the automatic engine shutdown condition is established (only before engine start processing or engine shutdown processing).

As described above, in this embodiment as well, during engine start processing or during engine shutdown processing while the vehicle is traveling, and/or before an engine start condition or an engine shutdown condition is established while the vehicle is traveling, the indication of the gear shift guide indication apparatus is provided in an indication form corresponding to the engine start processing or the engine shutdown processing (for example, in an indication form in which both the up-shift lamp 67 and the down-shift lamp 68 are illuminated), whereby a situation can be eliminated in which, for example, the regular gear shift guide for prompting the driver to perform a manual gear shifting operation is indicated despite the fact that the effect of improving fuel consumption is unlikely to be obtained during the engine start processing, during the engine shutdown processing or the like. As a result, annoyance of the driver can be reduced. Furthermore, the indication in an indication form corresponding to the engine start/shutdown processing can be provided during the engine start processing or during the engine shutdown processing, as a result of which it is possible to inform the driver that the engine start processing or the engine shutdown processing is being executed.

In the hybrid vehicle of this embodiment, or in other words, the hybrid vehicle 200 equipped with a single motor generator 203 and a single multi-step transmission 205, the operation points of the motor generator 203 are changed as the transmission ratio (gear step) of the transmission 205 is changed, and therefore the gear shift operation is often performed even during EV travel in order to improve the operational efficiency of the motor generator 203. Accordingly, in the hybrid vehicle described above, while the vehicle is traveling (for example, during EV travel), it is particularly effective to perform indication control that provides the indication of the gear shift guide indication apparatus in an indication form corresponding to the engine start/shutdown processing during the engine start processing or during the engine shutdown processing while the vehicle is traveling and/or before an engine start condition or an engine shutdown condition is established while the vehicle is traveling.

In Embodiment 2, the transmission 205 may be a continuously variable transmission such as a belt-driven continuously variable transmission.

### - Other Embodiments -

Embodiment 1 described above has illustrated an example in which the present invention is applied to an FF hybrid vehicle HV, but the present invention is not limited thereto, and may be applied to an FR hybrid vehicle or a 4WD hybrid vehicle.

Embodiment 1 described above has illustrated an example in which the present invention is applied to a so-called split-type hybrid vehicle HV provided with two motor generators MG1 and MG2 and a power dividing mechanism 3, but the present invention is not limited thereto, and may be applied to a so-called serial or parallel type hybrid vehicle. The serial type hybrid vehicle is a hybrid vehicle in which the engine is used only for electric power generation by the electric power generator and the driving wheels are driven only by the motor, and the parallel type hybrid vehicle is a hybrid vehicle in which the driving wheels are driven by the engine and the motor.

Embodiments 1 and 2 described above have illustrated an example in which the present invention is applied to the control of a hybrid vehicle equipped with two motor generators or a single motor generator, but the present invention is also applicable to the control of a hybrid vehicle that is provided with three or more motor generators, at least one of which assists the travel driving force of the vehicle.

The term "gear step" used in the present invention is defined as "the operating state that can be switched by driver's manual operation. Specifically, the transmission ratios fixed for respective steps (gear steps) and the transmission ratios having a certain margin in respective steps are also encompassed in the "gear step" as used in the present invention. The transmission ratios having a certain margin refers to the transmission ratios having a linear margin as used in automatic gear shifting or a stepped margin as used in stepped gear shifting and range holding (which will be described later). As the concept of "step" in the case of range holding, for example, in a hybrid vehicle that has ranges for increasing the braking force by engine braking (engine braking range; B range), the B range is also encompassed in the meaning of the word "step".

In the present invention, the gear shifting system can be a range hold type system (in which the selected gear step can be automatically shifted to a lower gear step) and a gear hold type system (in which the selected gear step is maintained). As used herein, the term "range hold type" refers to the type that performs control such that the hybrid ECU 10 or the like performs automatic gear shifting within a limited gear step range in which the current gear step is set as the upper limit gear step and the upper limit gear step is set as the highest gear step (the lowest transmission ratio) when the shift lever is in the sequential position (S position), such as a state in which, for example, if the gear step in the manual gear shifting mode is the third (3rd) gear step, the third gear step is set as the upper limit gear step and automatic gear shifting between the third (3rd) gear step and the first (1st) gear step is possible.

The present invention is applicable to hybrid vehicles equipped with only a manual transmission as a transmission unit.

### [Industrial Applicability]

The present invention can be effectively used for gear shift guide indication control during the manual gear shifting mode in a hybrid vehicle equipped with an engine and an electric motor (motor generator or motor) as power sources for vehicle travel and an indication apparatus for prompting the driver to shift the gear.

### [Reference Signs List]

- 1, 200: Hybrid Vehicle
- 2, 201: Engine
- 3: Power Dividing Mechanism
- 6a, 6b, 206L, 206R: Driving Wheel
- 10: Hybrid ECU
- 16: GSI-ECU
- 24: Battery
- 52: Accelerator Opening Degree Sensor
- 54: Vehicle Speed Sensor
- 67: Up-Shift Lamp
- 68: Down-Shift Lamp
- 100: Gear Shift Guide Indication Apparatus (Indication Apparatus)
- MG1: First Motor Generator
- MG2: Second Motor Generator
- 203: Motor Generator

## Claims

1. A hybrid vehicle including an engine that is capable of outputting power for travel, an electric motor that is capable of outputting power for travel, a transmission unit that allows manual gear shifting and is provided in a power transmission system that transmits power to driving wheels and an indication apparatus that is capable of providing a gear shift guide indication for prompting a manual gear shifting operation of the transmission unit, the hybrid vehicle being capable of motor-driven travel that enables traveling by using only power of the electric motor,
wherein during engine start processing or during engine shutdown processing while the vehicle is traveling and/or before an engine start condition or an engine shutdown condition is established when it is predicted that the engine start condition or the engine shutdown condition will be established while the vehicle is traveling, an indication of the indication apparatus is provided in an indication form that is different from the gear shift guide indication for prompting manual gear shifting and corresponds to the engine start processing or the engine shutdown processing.

2. The hybrid vehicle according to claim 1,
wherein the prediction of establishment of the engine start condition or the engine shutdown condition is performed based on at least one of remaining capacity in an electric power storage apparatus provided in the hybrid vehicle and a driving force request made by a driver.

3. The hybrid vehicle according to claim 1 or 2,
wherein the indication form corresponding to the engine start processing or the engine shutdown processing is an indication form in which both an up-shift indication unit and a down-shift indication unit of the indication apparatus are illuminated, an indication form in which the indication units of the gear shift guide indication apparatus are blinked, or an indication form in which an individual indication unit corresponding to the engine start processing or the engine shutdown processing is illuminated.

4. The hybrid vehicle according to any one of claims 1 to 3,
wherein the power transmission system is provided with a continuously variable transmission mechanism that allows a transmission ratio to be steplessly switched, and is configured such that in a manual gear shifting mode in which the transmission unit is manually shifted, the transmission ratio set in the continuously variable transmission mechanism is switched to a plurality of steps.

5. The hybrid vehicle according to claim 4, comprising:
a power dividing mechanism constituted by a planetary gear mechanism including a planetary carrier to which an output shaft of the engine is coupled, a sun gear to which a first electric motor is coupled and a ring gear to which a second electric motor is coupled,
wherein the transmission ratio in the power transmission system can be changed by controlling a rotation speed of the first electric motor to change a rotation speed of the engine.

6. The hybrid vehicle according to any one of claims 1 to 3, comprising:
the engine and the electric motor,
wherein a stepped transmission that allows a gear step to be manually selected is provided in a power transmission path between the electric motor and the driving wheels.
